# NEUE EUROPÄISCHE PATENTSCHRIFT

(11) **EP 0 271 670 B2**
(45) Veröffentlichungstag und Bekanntmachung des Hinweises auf die Entscheidung über den Einspruch: **13.12.1995**
(45) Hinweis auf die Patenterteilung: 12.06.1991
(21) Anmeldenummer: 87115493.6
(22) Anmeldetag: 22.10.1987
(51) Int. Cl.: G01N 29/04

(54) **Verfahren zur Detektion von Korrosion oder dergleichen**
Method for the detection of corrosion or such
Procédé pour la détection de la corrosion ou similaire

(30) Priorität: 14.11.1986 DE 3638936
(43) Veröffentlichungstag der Anmeldung: 22.06.1988
(73) Patentinhaber: KERNFORSCHUNGSZENTRUM KARLSRUHE GMBH, D-76021 Karlsruhe (DE); Pipetronix GmbH, 76131 Karlsruhe (DE)
(72) Erfinder: Ellmann, Josef, Dipl.-Ing., D-7513 Stutensee (DE); Krieg, Wolfgang, Dipl.-Ing., D-7513 Stutensee (DE); Stripf, Helmut, Dipl.-Ing., D-7514 Leopoldshafen (DE); Ottes, Josef, Dr. Dipl.-Ing., D-7520 Bruchsal (DE); Krieg, Gunther, Prof. Dr. Dipl.-Phys., D-7500 Karlsruhe (DE)
(74) Vertreter: Lempert, Jost, Dipl.-Phys. Dr. rer.nat.

(56) Entgegenhaltungen:
- DE-A- 3 530 525
- GB-A- 2 020 023
- GB-A- 2 140 561
- JP-A- 5 769 515
- JP-A-61 156 552
- US-A- 3 636 778
- US-A- 3 810 384
- US-A- 4 008 603
- US-A- 4 205 554
- US-A- 4 229 796
- PATENT ABSTRACTS OF JAPAN, Band 10, Nr. 147 (P-460)[2204], 29. Mai 1986; & JP-A-61 757
- Nippon Kokan Technical Report, No. 39, December 1983
- Nippon Kokan Technical Report, No. 46, September 1986
- T.R. Schmidt: "The Casing Inspection Tool - An Instrument for the In-Situ Detection of External Casing Corrosion in Oil Wells", CORROSION, Vol. 17, July 1961
- T.R. Schmidt: "The Remote Field Eddy Current Inspection Technique", Materials Evaluation, Vol. 42, No.2, February 1984
- J. Aronson: "Data Compression: A comparison of methods", NBS Special Publication 500-12, U.S. DEPARTEMENT OF COMMERCE, National Bureau of Standards, June 1977

## Beschreibung

Die Erfindung betrifft ein Verfahren nach dem Oberbegriff des Anspruchs 1. Bei Rohrleitungen ist eine automatische zerstörungsfreie Prüfung hinsichtlich Korrosion. Lochfraß oder dergleichen erforderlich. Derartige Fehler können durch von ihnen bewirkte Änderungen der Dikke der Rohrwandung festgestellt werden.

Zur Rißprüfung wurde das Wirbelstromverfahren vorgeschlagen, bei dem ein elektromagnetisches Wechselfeld einer Erregerspule Wirbelströme in der Rohrleitungswandung induziert, die von einer am gleichen Ort befindlichen Sensorspule detektiert werden. Das Verfahren hat sich bei der Detektion von Innenrissen bewährt, es können jedoch Fehler, die von der Außenwand zur Innenwand wachsen, wie korrosive Wandabtragung. Risse wegen der in der Regel relativ großen Stärken der Rohrwandungen (ca. 20 mm und mehr) und der geringen Eindringtiefe des Feldes nur schlecht oder nicht gefunden werden. Eine bekannte Einrichtung nach diesen Verfahren ist zur Korrosionsdetektion nicht geeignet und wurde hierzu auch nicht eingesetzt.

Weiterhin wurde der Einsatz des Streuflußverfahrens vorgeschlagen, bei dem die Pipeline-Wandung bis in die Nähe der magnetischen Sättigung durch Einsatz von Permanent-oder Elektromagneten magnetisiert wird. Durch Risse in der Pipeline-Wandung tritt das Magnetfeld lokal aus der Wandung aus. Die Detektion des Streufelds mit geeigneten Magnetfeldsensoren ermöglicht einen Nachweis der Risse. Auch dieses Verfahren ist eher zur Detektion von Rissen und weniger für Korrosionsmessungen geeignet. Insbesondere ist eine Bestimmung der Restwandstärke von Pipelines nicht möglich.

Ein weiterer Vorschlag beruht auf der elektromagnetischen Einkopplung von Ultraschall-Wellen in die Pipeline-Wandung und Messung der Laufzeit der an der Rückwand reflektierten Ultraschall-Impulse. Es ist zwar kein UltraschallKoppelmedium erforderlich, das Verfahren verlangt jedoch einen hohen Leistungsbedarf zur Einkopplung und weist einen schlechten Wirkungsgrad bei der Umwandlung von elektromagnetischer Energie in Schallenergie auf, so daß der Signal-Rausch-Abstand für die geforderte Fehlererkennung zu gering ist. Weiterhin ist mit dem Verfahren eine Wanddickenbestimmung bei Innenkorrosion nicht möglich.

Die US-A-3 810 384 zeigt ein gattungsgemäßes Verfahren zum Detektieren von Korrosion oder dergleichen in Rohrleitungen mittels Ultraschall, wobei während des Laufs eines Molches durch eine Pipeline Ultraschallsignale ausgesandt und zur Durchführung von Messungen verwendet werden, Meßergebnisse gespeichert und diese nach Durchführung des Meßlaufs ausgewertet werden. Dies geschieht mit einem Molch, der von einer durch eine Pipeline fließende Flüssigkeit durch diese bewegt wird, in dem diese an den Molchkörper umgebenden Manschetten angreift. An dem Gehäuse ist ein starres Halteteil für Ultraschallwandler befestigt, die am Umfang des Halteteils angeordnet sind. Im Gehäusekörper ist eine Elektronik angeordnet, die einen Meß- oder Zählschaltkreis aufweist. Dieser wird erst in Betrieb gesetzt, wenn ein von der Innenseite der Rohrleitung reflektiertes Signal empfangen ist. Durch dieses wird ein Rampengenerator ausgelöst, dessen mit der Zeit ansteigende Spannung ein Maß für die vergangene Zeit ist, so daß der Rampengenerator als Stoppuhr wirk, deren Lauf nach Eintreffen eines Reflexes von der Außenwandung oder einer Fehlstelle gestoppt wird. Die dann erreichte Spannung als Laufzeitsignal des Rampengenerators ist proportional zur gesuchten Wanddicke. Das Ausgangssignal des Rampengenerators repräsentiert nur die Restfangstärke unabhängig davon, ob Außenkorrosion, Innenkorrosion oder beides zugleich vorliegt. Das bekannte Verfahren ist nicht in der Lage, Außen- bzw. Innenkorrosion zu unterscheiden.

Die US-A-4 205 554 zeigt eine Vorrichtung zur Detektion von Fehlern an einem Objekt. Es ist eine Sensoreinheit vorgesehen, die mit einer Antriebseinheit über das Objekt bewegt werden kann. Die Sensoren müssen unmittelbar auf der Oberfläche aufliegen. Es werden nur die Reflektionssignale einer im Inneren des Objekts befindlichen Fehlerstelle angesprochen. Wesentliches Merkmal des Verfahrens nach dieser Druckschrift ist, daß eine Schwächungscharakteristik für den reflektierten Strahl vorgegeben bzw. simuliert wird und nur Reflektionssignale, die die Kurve der Schwächungscharakteristik überschreiten, detektiert, zwischengespeichert und digital weiterverarbeitet werden.

Der Erfindung liegt die Aufgabe zugrunde, ein verbessertes Verfahren zum Detektieren von Korrosion oder dergleichen in Rohrleitungen zu schaffen, welches insbesondere auch in der Lage ist, den radialen Ort der Korrosion zu bestimmen und damit Außen- und Innenkorrosion zu unterscheiden.

Erfindungsgemäß wird die genannte Aufgabe durch ein Verfahren der gattungsgemäßen Art mit den kennzeichnenden Merkmalen des Anspruchs 1 gelöst.

Die Ultraschall-Laufzeitmessung erfolgt nach dem Impuls-Reflektionsverfahren durch Senkrechteinstrahlung. Der durch den Sendeimpuls am Prüfkopf ausgelöste Ultraschall-Impuls durchläuft eine am Prüfkopf ausgebildete Ölvorlaufstrecke, wird zu einem Teil an der Rohrinnenwand reflektiert, gelangt zum Teil in die Rohrwandung und wird an deren Rohraußenwand reflektiert. Beide Reflektions-impulse laufen zum Prüfkopf zurück. Mehrfach-Reflektionen können durch entsprechende Fenster während der Messung ausgeschaltet werden. Bei diesem Verfahren werden also bei jedem ausgesandten Ultraschall-Impuls zwei Laufzeiten ermittelt, deren erste den Abstand zur rohrinnenwand angibt, während die Differenz beider die Stärke der Rohrinnenwand bestimmt. Durch beide Impulse kann festgestellt werden, ob eine Schwächung der Rohrwand auf einer Innen- oder einer Außenkorrosion beruht.

Durch die Taktung der Messungen brauchen nicht kontinuierlich sämtliche Meßwerte aufgenommen und aufgezeichnet zu werden, sondern nur solche im Rhythmus der Taktung, die zunächst von der gewünschten Auflösung und darüberhinaus vom Verhältnis von zu durchlaufender Meßstrecke und Speicherkapazität abhängt. Durch die Digitalisierung der Meßergebnisse werden die Voraussetzungen geschaffen, diese sowohl in speichersparender Form abzulegen, als auch gegebenenfalls noch zusätzlich aufzubereiten. Durch Zwischenspeicherung und lediglich blockweises Endspeichern, kann eine dichte Packung der Information auf dem Endspeicher-Medium, nämlich einem Massenspeicher vorgenommen werden, wie es bei kontinuierlicher Abspeicherung empfangener Meßdaten nicht der Fall ist.

Gemäß dem erfindungsgemäßen Verfahren ist vorgesehen, daß bei mehreren, über den Umfang des Molches vorgenommenen Messungen, diese insgesamt in einem Meßdatenblock mit weiteren Informationen zusammengefaßt werden. Es ist nicht erforderlich, daß bei über den Umfang eines Meßmolches verteilten Sensoren die Meßdaten jedes einzelnen Sensors mit einer Wegstrecken-Information versehen werden. Es reicht, wenn die Meßergebnisse der im Multiplexverfahren während einer Abtastperiode abgetasteten Sensoren zusammengefaßt und insgesamt mit einer Wegstrecken-information versehen werden. Dies gilt insbesondere auch, wenn, wie in der Patentanmeldung EP-A- 255 619 vorgesehen, die den Umfang erfassenden Sensoren nicht sämtlich auf einer Umfangslinie liegen, sondern in Gruppen versetzt zueinander hintereinander angeordnet sind, um den Umfang lückenlos zu erfassen; in diesem Falle kann eine Korrektur bezüglich einer Umfangslinie für die nicht auf dieser liegenden Sensoren im Hinblick auf die Weginformation vorgenommen werden.

Auch Molche, die eine exzentrische Gewichtsverteilung haben, so daß sie weitgehend die gleiche Azimut-Lage einnehmen, können um die Normlage schwanken. Aus diesem Grunde ist es vorteilhaft, weiterhin vorzusehen, daß die Winkellage des Molches in der Rohrleitung bestimmt und mitgespeichert wird, damit auch jeder Meßwert in Bezug auf den Umfang der Rohrleitung seinem korrekten Ort zugeordnet werden kann. Diese Ausgestaltung erspart im übrigen eine exzentrische Gewichtsverteilung, wenn Winkellage über den gesamten Umfang gemessen werden kann. Hierzu ist vorzugsweise ein 360 Grad Pendel-Potentiometer vorgesehen.

In weiterer bevorzugter Ausgestaltung kann vorgesehen sein, daß die Wegstrecken-Information mehrfach gemessen und die wahrscheinlichste abgespeichert wird. Bei der Wegmessung, zu der in der Regel Odometerräder verwendet werden, können Fehler, aufgrund von Schlupf oder Frei-drehen eines Rades, beispielsweise im Bereich von Anschlußstutzen auftreten. Es ist daher sinnvoll, die Weginformation zunächst mehrfach zu gewinnen und dann bei unterschiedlichen Informationen eine sinnvolle zur Weiterverarbeitung zu verwenden. Hierzu ist vorgesehen, daß mehrere Weggeber mit einer Wegbearbeitungseinheit vorgesehen sind, wobei insbesondere derei Odometerräder gleichmäßig über den Umfang verteilt sind. Bei zwei Weginformationen kann grundsätzlich der Mittelwert genommen werden, da der häufigst auftretende Fehler aber der Schlupf ist, wird in bevorzugter Weise der den größeren Weg anzeigende Meßwert weiterverwendet, da dieser mit dem geringsten Schlupffehler behaftet ist. Die Auswahl kann noch an weitere Kriterien, wie beispielsweise den Unterschied der beiden gewonnenen Weginformationen gekoppelt werden.

Bei drei gewonnenen Weginformationen sind grundsätzlich ebenfalls mehrere Auswertungsarten möglich. Vorteilhafterweise ist hier vorgesehen, daß bei 3 Odometer-Rollen 2 Odometerräder ausgewählt werden, deren Meßergebnisse die geringste Differenz aufweisen. Zur Korrektur der Odometer-Zählimpulse können zunächst grundsätzlich Schweißstellen der Rohrleitung verwendet werden. Darüberhinaus können, soweit dies möglich ist, außerhalb des Rohres an geodätisch genau bekannten Orten Markierungen, sogenannte Bench-Marker vorgesehen werden. Die von diesen ausgesandten Signale werden beim Vorbeifahren des Molches von einem Empfänger detektiert und abgespeichert. Dieser Marker-Signale korrigieren bei der Auswertung die Odometerwerte.

Bei der Durchführung der Messungen kann vorzugsweise vorgesehen sein, daß nur solche Meßergebnisse aufgenommen und weiterverarbeitet werden, die innerhalb eines vorgegebenen Zeitbereichs nach Aussenden eines Meßsignals empfangen werden. Hierdurch werden Fehler, wie sie durch Mehrfachreflexionen bei der Durchführung der Ultraschallmessung auftreten können, ausgeblendet. Die Zeitintervalle können entsprechend der Vorlaufsstrekke bzw. gemäß den vorliegenden maximalen Wanddicken eingestellt werden. Sowohl Beginn als auch Ende der Zeitintervalle von Vor- und Wanddickenlaufzeit können getrennt eingestellt werden. Dadurch wird beispielsweise verhindert, daß der zweite Rückwandreflex zur Auswertung herangezogen wird. Vor dem Molchlauf sind die Blenden so einzustellen, daß sie den gesamten zu erwartenden Rohrwanddickenbereich abdecken.

Zusätzlich kann vorgesehen sein, daß ein niederfrequentes elektromagnetisches Wechselfeld in die Rohrwandung eingeschleust und mit Abstand zur Einschleusungsstelle bezüglich Amplitude detektiert sowie die Phasenverschiebung gemessen wird. Bei diesem sogenannten Fernfeld-Wirbelstrom-Verfahren wird das von der Exciterspule erzeute niederfrequente sinusförmige elektromagnetische Wechselfeld mit Frequenzen im Bereich von 50 bis 500 Hz über die Pipeline-Wandung vorgeleitet und von Sensoren, die sich in entlang der Wand gegebenem Abstand, insbesondere in axialem Abstand zur Exciterspule befinden, detektiert. Hierdurch ist eine empfindliche Fehlerdetektion durch Messung der Phasenverschiebung zwischen dem Sinussignal der Sendespule und den von den Sensoren empfangenen Sinussignalen möglich. Das genannte Verfahren kann insbesondere zur Detektion von Lochfraß aber auch zur Feststellung von Rissen eingesetzt werden. Weiterhin ist die Detektion natürlicher Korrosion und auch von Schweißnähten mit hoher Empfindlichkeit nicht nur auf der Innen- sondern auch auf der Außenseite möglich. Als Sensoren werden vorzugsweise Induktionsspulen oder Hall-Generatoren eingesetzt.

Die oben genannten Maßnahmen hinsichtlich der Gewinnung der Meßdaten führen dazu, daß trotz der großen anfallenden Informationsmenge geeignete Massenspeicher im Gigabytebereich Messungen über eine hinreichende Weglänge von mehreren 1000km abspeichern können.

Eine andere Ausgestaltung zeichnet sich dadurch aus daß nur die Differenz korrespondierender Meßwerte abgespeichert wird, wobei weiter vorgesehen sein kann, daß bei auftretenden Meßwertdifferenzen unterhalb eines vorgegebenen Werts mehrere, insbesondere zwei Meßwerte separat jeweils in einem einzigen Byte dargestellt werden und daß in einem Führungsbyte der Modus und die Anzahl der Bytes in diesem Modus eingetragen werden. Das Endspeichern zwischengespeicherter Daten erfolgt in der Regel wesentlich seltener ner als das Zwischenspeichern. Durch die Zwischenspeicherung und lediglich Übergabe größerer Datenblöcke in der Größenordnung von MByte zum Massenspeicher wird erreicht, daß gegenüber einer kontinuierlichen Aufzeichnung die Daten wesentlich dichter auf dem Massenspeicher abgespeichert werden können und damit eine größere Datenmenge abgespeichert werden kann.

Zur Auswertung ist vorzugsweise vorgesehen, daß Rohrwandungsfehler nach ihrer Verteilung über ihrer Wandung dargestellt werden, wobei insbesondere verschiedene Tiefen der Fehler mit unterschiedlichen Farben dargestellt werden.

Um den Querschnitt von Korrosions- oder Lochfraßstellen feststellen zu können, sieht eine weitere bevorzugte Ausgestaltung vor, daß Querschnitte der Rohrwandung, insbesondere in Bereichen von Fehlerstellen, dargestellt werden.

Weitere bevorzugte Ausgestaltungen sehen vor, daß nur bei endlicher Geschwindigkeit Messungen und die Verarbeitung von Meßwerten erfolgen, sowie unter einen vorgegebenen Molchgeschwindigkeitswert keine Verarbeitung von Messungen erfolgt.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1 a: eine schematische Darstellung einer Meßanordnung bei Ultraschall und
- b: Abstand Sensor-Wand bzw. Wandstärke;
- Fig. 2 a: eine schematische Darstellung einer Wirbelstrom-Meßanordnung und
- b: Meßergebnisse einer Wirbelstrommessung über eine untersuchte Fläche;
- Fig. 3 a: eine schematische Verdeutlichung zweier Darstellungsweisen,
- b: die sich ergebende Querschnittsdarstellung und
- c: eine Messung in flächiger Übersichtsdarstellung;
- Fig. 4: ein Blockschattbild der erfindungsgemäßen Einrichtung.

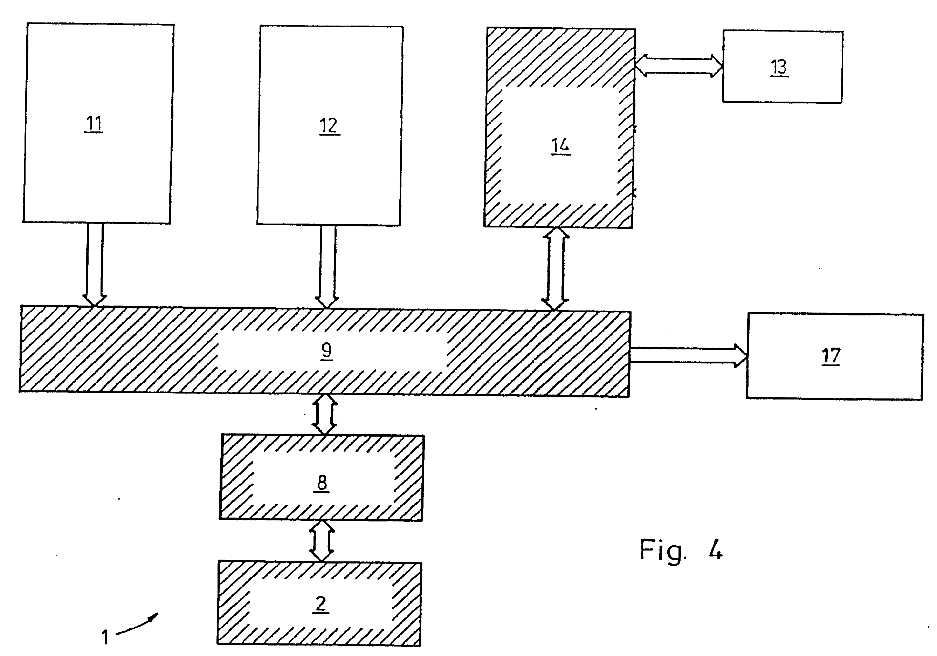

Die erfindungsgemäße Meß- und Speichereinrichtung 1 ist insgesamt, bis auf ein extern anschließbares Terminal, im Gehäuse eines Molches, der durch Druckdifferenz durch eine Rohrleitung bewegt werden kann, untergebracht. Die Einrichtung 1 weist ein Ultraschallmeßsystem 2 auf (Figur 4).

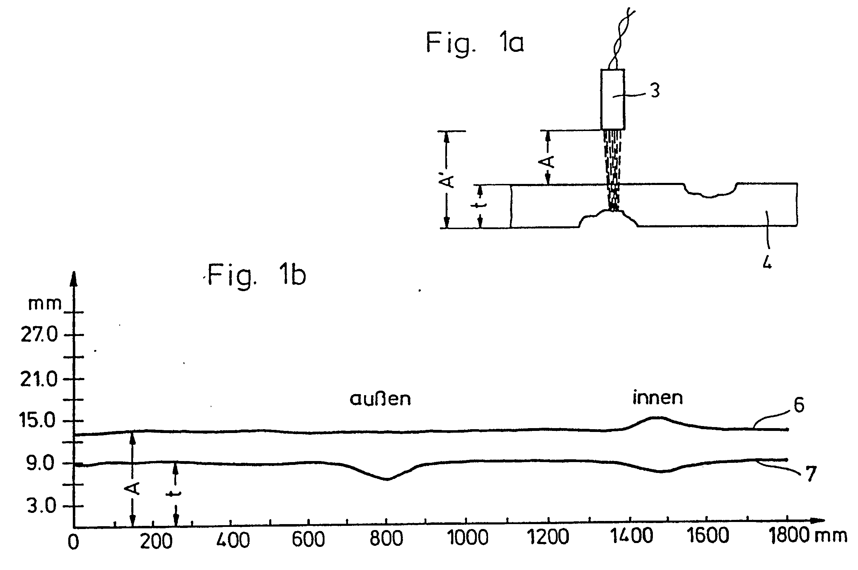

Es sind beispielsweise mehrere Ultraschall-Sensoren 3 in geeigneter Weise über den Umfang des Meßmolches verteilt angeordnet. Den Sensoren 3 zugeordnete Kanäle der Elektronik werden im Multiplex-Verfahren abgefragt. Ein gegen eine Wand 4 gesandtes Ultraschall-Signal wird zunächst an der zum Sensor hin gerichteten Fläche als ein erstes Meßsignal 6, das den Abstand des Sensors zur Wand kennzeichnet und an der Rückseite der Wand 4 als weiteres Meßsignal reflektiert, wobei der Laufzeitunterschied ein Meßsignal 7 für die Wanddicke t ergibt (Figur 1). In der Figur 1 b zeigt zunächst nur das Meßsignal 7 eine Abweichung vom normalen Wert und damit die Reduzierung der Wanddicke t an der in Figur 1 a mit "Außen" bezeichneten Stelle an, während in diesem Bereich das den Abstand A des Sensors zur Wand angebende Signal 6 keine Veränderung zeigt. Dieses Meßsignal 6 zeigt aber an der zweiten in der Figur 1 mit "Innen" bezeichneten Korrosionsstelle ebenso eine Abweichung wie das Meßsignal 7. Das Meßsignal 6 zeigt hier die Änderung des Abstandes A der Sensor-Wand und damit an, daß eine Innenkorrosion vorliegt, während das Meßsignal 7 wiederum die gesamte Wandstärke t angibt.

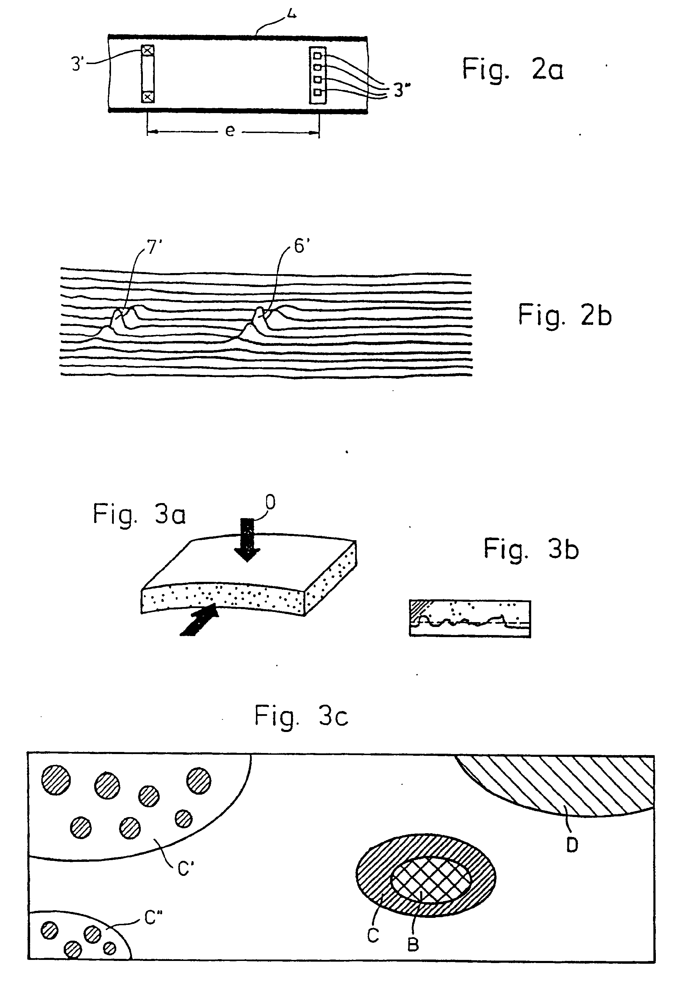

Figur 2 a stellt schematisch die Anordnung einer Erregerspule 3′ und deren zugeordneten Sensoren 3˝ in einer Pipeline mit der Wand 4 dar. Figur 2 b zeigt das erhaltene Verzögerungssignal, d.h. die Ohner-Verbindung zwischen Erregersignal und Sensorsignal, wobei die Spitzen 6′, 7′ beschädigte Stellen der Rohrwandung 4 angeben. Eine Aufzeichnungskurve gibt einen Längsschnitt durch die Rohrwandung (Pfeil 0 in Figur 3 a), während die Kurvenschar die Veränderung über den Azimut darstellt. Die Figur 3 b zeigt noch einmal eine Querschnittsdarstellung beispielhaft für ein Ultraschall-Signal, während die Figur 3 c eine flächenhafte Sicht entsprechend des Pfeils Oder Figur 3 a wiedergibt. Unterschiedliche Wandstärken können durch unterschiedliche Raster oder Farbaufträge wiedergegeben werden: Der Bereich B zeigt beispielsweise tiefrot ein tiefes Loch an, das von einem etwas flacheren Bereich C - gelb - umgeben ist. In dem Bereich C′. C′ sind eine Vielzahl einzelner Löcher gleicher Tiefe (gelb), während der Bereich D flache Unebenheiten - blau - aufweist. Es können hier feine Abstufungen z.B. durch Farbaufträge gewählt werden. Die Normwandstärke wird dabei durch die Hintergrundfarbe dargestellt. Die Farbkennzeichnungen können hier nicht wiedergegeben, sondern nur in der vorstehenden Weise erläutert werden.

Die durch Messung, Datenerfassung, gegebenenfalls Komprimierung der Daten, Aufzeichnung und Steuerungsvorgänge gegebenen Teilvorgänge werden durch mehrere den jeweiligen Teilvorgängen zugeordnete eigene Verarbeitungssysteme, nämlich Datenerfassung- und Kompressionseinheit 8, Aufzeichnungsrechner 9, und Master 14 bearbeitet (Figur 4). Die verschiedenen Rechnersysteme kommunizieren über Busoder parallele Kopplung miteinander.

Dem Meßsystem 2 ist eine Datenerfassungseinheit 8 nachgeordnet, die auch einen Modul zur Kompression der Daten aufweisen kann. Die erfaßten Daten werden einem Aufzeichnungsrechner 9 übergeben, der einen Zwischenspeicher aufweist. In der Datenerfassungseinheit 8 werden die erfaßten Meßdaten mit weiteren Daten, insbesondere zum Ort des Meßmolches und seiner Winkellage im Rohr verbunden. Hierzu ist eine Marker-Einheit 11, eine Winkelgeber-Einheit 12 sowie eine Weggeber-Einheit 13 vorgesehen. Um die Datenerfassungseinheit zu entlasten, werden diese Zusatzdaten getaktet, vom Weggeber 13 über den Aufzeichnungsrechner 9 erfaßt und über ein Dual-Port-RAM vom Datenerfassungsrechner 8 mit den anderen Meßdaten verknüpft. Die Gesamtsteuerung der erfindungsgemäßen Einrichtung erfolgt durch einen Master-Rechner 14. In der Testphase kann der Master 14 die erfaßten Daten vom Aufzeichnungsrechner 9 abrufen und darstellen. Nach Beendigung eines Molchlaufes wird das Magnetband an einen Personalcomputer angeschlossen, um die Daten zu lesen und auszuwerten.

Durch einen vom Datenerfassungsrechner 8 getakteten Zähler und Zeitgeber, werden beispielsweise Ultraschallgeber derart aktiviert, daß jeweils mit einem Zeitabstand von weniger als 100 »s, beispielsweies alle 39 oder 78 »s Ultraschall-Impulse ausgelöst werden. Die Sensoren werden sequentiell unter Einhaltung eines Winkelversatzes von ca. 175° befeuert, wodurch eine geringstmögliche gegenseitige Beeinflussung der einzelnen Sensoren erreicht wird. Bei 64 über den Umfang des Molches verteilten Sensoren und Impulsauslösung alle 78 »s ergibt sich eine Gesamtabtastzeit über den Umfang von 5 Millisekunden, so daß bei einer mittleren Molchgeschindigkeit von 1 m/sek. der Abstand zwischen zwei Abtastpunkten in Längsrichtung 5 mm beträgt. Bei einer Reduzierung der Impulsabtastzeit auf 39 »Sek., kann der Impuls-Weg-Abstand auf 2,5 mm verkürzt werden, so daß bei einem Abtastdurchmesser vom 6 mm in Längsrichtung sicher eine flächendeckende Abtastung erreichbar ist. Bei einer Abtastfrequenz von 12,8 KHz (entsprechend Befeuerung alle 78 »s) ergibt sich aufgrund der erwähnten beiden reflektierten Meßsignale, an der vorderen und der hinteren Wandfläche der Rohrleitungswand, eine Datenrate von 25.600 Meßwerten pro Sekunde. Bei der genannten Molchgeschwindigkeit fallen diese Daten bei einer beispielsweise 300 km langen Pipeline für eine Dauer von 83 Stunden an. Die Laufzeit der reflektierten Signale wird mittels eines Laufzeit-zählers, der beispielsweise mit 29,6 MHz getaktet ist, digitalisiert, womit sich Auflösungen des Ultraschall-Systems von 0,1 mm in der Rohrwand und 0,021 mm im Raum zwischen Sensor und Wand ergeben. Da geringere Auflösungen ausreichen, können die Daten beispielsweise mit einer Auflösung von 0,2 mm Wandstärke und 0,33 im Zwischenraum aufgezeichnet werden, wobei sich bei einer digitalen Darstellung in 8 Bit für jeden Meßwert eine maximal erfaßbare Wandstärke von 51 mm und ein Abstand von 82 mm ergibt, was völlig ausreichend ist.

Insgesamt ergibt sich aus Vorstehendem, welch hohe Datenübertragungsgeschwindigkeit und welche Gesamtinformation über den vorgenannten beispielsweisen Meßlauf anfallen.

Die Impulsfolgefrequenz und damit die Anzahl der Sensoren sowie die Frequenz der Gesamtabtastung wird bei vorgegebener gewünschter Auflösung zunächst durch die maximale Datenrate des Endspeichers, nämlich eines Massenspeichers, wie eines Magnetbandes bestimmt, die bei 1.6 MBit/sek. liegen kann.

Um die von der Datenerfassungseinheit 8 gelieferte Datenrate und Informationsmenge zu reduzieren, wird in bevorzugter Weise eine Datenkompression vorgenommen. Diese erfolgt dadurch, daß nicht jeder gemessene Meßwert als solcher separat gespeichert wird, sondern nach Messung eines Meßwerts, insbesondere der Normwerte von Wandabstand und Wanddicke der Rohrleitung, ähnliche oder gleiche Meßwerte lediglich gezählt werden. Ähnlich oder gleich heißt, daß die Folgewerte von dem Ausgangswert sich nur um einen bestimmten Betrag, der vorgewählt werden kann, unterscheiden dürfen, um als gleich oder ähnlich ledig-lich gezählt zu werden. Gespeichert werden braucht dann lediglich noch die Anzahl der gleichen oder ähnlichen Meßwerte bis zum Auftreten eines die vorgegebene Grenze überschreitenden Meßwerts. Die Anzahl der gleichen oder ähnlichen Meßwerte kann dadurch festgehalten werden, daß in einem einen Meßwert darstellenden digitalen Wort, beispielsweise einem Byte, das höchstwertige Bit (MSB) zur Darstellung des Meßwerts nicht gesetzt wird. Dieser kann dann gesondert gesetzt werden, wenn ein Meßwert gleich oder ähnlich einem vorangehenden Meßwert ist. Damit wird bei der Auswertung eine andere Interpretation des Worts oder Bytes bewirkt. In die niederwertigen Bits wird die Anzahl der Meßwerte, die im Vergleich mit der zuletzt übernommenen Messung sich maximal um einen vorgegebenen Wert verändert haben, aufgenommen. Wenn als Wort weiterhin ein Byte verwendet wird, so können in dieser Form maximal 128 Meßwerte als gleich oder ähnlich gezählt werden. Wenn es weniger Meßwerte sind, so wird in einem folgenden Byte das höchstwertige Bit nicht gesetzt, so daß das darauffolgende Byte wieder als Meßwert interpretiert wird.

Um längere Leitungen bei einer hohen Anzahl von Sensoren molchen zu können, kann der Kompressionsfaktor noch verbessert werden. Dabei wird zusätzlich der Modus "Differenz kleiner 16" benutzt. Ist die Differenz der Meßwerte kleiner als 16 (dezimal), so lassen sich mehrere, insbesondere zwei Meßwerte differenziert in einem Byte darstellen. In einem Führungs-Byte wird der Modus und die Anzahl der Bytes in diesem Modus eingetra gen.

Bei der Auswertung interessiert neben der Tiefe der Korrosionsstellen auch ihr Ort und ihre Erstreckung, andererseits wird der Molch durch das Medium der Rohrleitung bzw. den Druckunterschied vor und hinterher durch die Rohrleitung gedrückt, so daß seine Geschwindigkeit sich verändern kann. Es wird daher eine Wegmessung vorgenommen und es werden Meßdaten und Weg einander zugeordnet. Hierzu ist eine Weggeber-Einheit 13 oder ein Odometer-System vorgesehen, das von mehreren Odometerrädern Wegstrecken-Impulse erhält. Da Fehler durch Schlupfeffekte oder frei-laufende Odometerräder innerhalb von T-Stükken auftreten können, hat es sich als vorteilhaft herausgestellt, bei mehreren Odometerrädern den Mittelwert der einander nächstliegenden Wegstrekken zu bilden. Hierdurch können Fehler minimiert werden. Zur Wegeichung können entlang der Pipeline elektronische Markierungen vorgesehen oder während des Laufs des Meßmolches aufgestellt werden. Die von diesen Markierungen ausgesandten Signale werden beim Vorbeifahren des Molches von der Markierungseinheit 11 detektiert und dem Aufzeichnungsrechner 9 zugeführt.

Zur eindeutigen Definition der azimutalen Lage des Molches, die zur Lokalisierung der Korrosionen über den Umfang des Rohres erforderlich ist, wird über ein 360°-Pendelpotentiometer über einen Analog-Digitalwandler ermittelt.

Das Master-System 14 überwacht die übrigen Elektronik-Komponenten, wobei es wegabhängig vom Weggeber 13 programmiert wird. Vorzugsweise ist die Spannungsversorgung des Masters unabhängig von der Versorgung der übrigen Elektronik, so daß es die Überwachung der Spannungsversorgung der übrigen Komponenten durchführen kann. Zur Speicherung auftretender Fehler ist ein nichtflüchtiger Speicher vorgesehen.

Um die Synchronisation, d.h. die Wiederauffindbarkeit der einzelnen Meßdaten, insbesondere im Zusammenhang mit der bis zu ihrem Anfall zurückgelegten Wegstrecke zu gewährleisten, werden die Daten des Markers 11, des Pendels 12, des Weggebers 13 sowie gemessene Temperaturdaten und die Daten des Meßsystems 2 im Rahmen einer Meßperiode, d.h. die während einer Gesamtabtastzeit erfaßten Meßdaten sämtlicher über den Umfang des Molchs verteilten Meßpunkte mit jeweils Meßwerten der vorderen und an der rückwärtigen Wandfläche zu Datenblöcken zusammengefaßt, wobei die einzelnen Blöcke gekennzeichnet werden können. Für die Weginformationen werden drei Bytes vorgesehen, so daß bei einer ausreichenden Auflösung von 10 cm beispielsweise 1.677 km erfaßt werden können. Unabhängig davon, ob die Daten komprimiert wurden oder nicht, werden sie von der Datenerfassungseinheit 8 zum Aufzeichnungsrechner 9 übertragen, wobei die Kopplung über ein Dual-Port-RAM als Schnittstelle zwischen Datenerfassung und Aufzeichnung erfolgt. Die Daten werden nach Versehen mit einer Kennung zunächst in einem Zwischenspeicher von beispielsweise 1 MByte zwischengespeichert und von dort durch direkten Speicherzugriff (DMA) in Form von Übertragungsblöcken mit beispielsweise einer Größe von 512 KByte auf den großen Massenspeicher, wie ein Magnetband mit 40 Gigabit bei einer Übertragungsrate von beispeilsweise 400 KBit seriell synchron übertragen. Letztere ist lediglich durch die maximale Aufzeichnungsrate des Massenspeichers 17 begrenzt, die bei dem verwendeten Bandgerät ca. 1,6 MBits pro Sekunde beträgt.

Abgesehen von der Vorverarbeitung der Meßdaten vor endgültiger Aufzeichnung werden die Daten auch aus Gründen der Ausnutzung der Kapazität des Magnetbandes nicht kontinuierlich auf dieses, sondern blockweise übertragen. Durch den Start-Stop-Betrieb entstehen in der An- und Ablaufphase jeweils undefinierte Datenbereiche auf dem Band. Der jeweils übertragene Übertragungsblock beträgt 512 KByte.

Nach Durchführung des Laufes können die gespeicherten Daten ausgewertet werden. Eine erste Ausführungsweise der Auswertung beinhaltet ein Anzeigen nur solcher Meßwerte, deren Beträge innerhalb eines vorgebbaren Größenbereichs liegen. Für die Ultraschall-Messung bedeutet dies, daß Werte angezeigt werden, die unterhalb einer bestimmten Mindestwanddicke liegen. Im Falle der Wirbelstrom-Methode werden nur solche Phasenverschiebungen ausgegeben, die größer als eine Mindestphasenverschiebung sind.

Bei einer weiteren ausführlichen Auswertungsweise wird einerseits die Flächenverteilung der gemessenen Korrosionsstellen auf der Innenfläche des Rohres dargestellt, wobei verschiedene Korrosionstiefen mit verschiedenen Farbwerten versehen werden können, anderereseits werden Darstellungen von interessierenden Korrosions- und Rißbereichen im Längsschnitt quantitativ graphisch dargestellt.

## Patentansprüche

1. Verfahren zum Detektieren von Korrosion oder dergleichen in Rohrleitungen mittels Ultraschall, wobei während des Laufs eines Molches durch eine Pipeline Ultraschallsignale ausgesandt, die Laufzeitdifferenz zwischen an der Innen- und der Außenwand reflektierten Signalen gemessen wird Meßergebnisse, mit einer Wegstreckeninformation versehen, gespeichert und die Meßergebnisse nach Durchführung des Meßlaufs ausgewertet werden, dadurch gekennzeichnet, daß taktweise sowohl die Zeit bis zum Empfang der von der Innenseite der Rohrleitung reflektierten Signale als auch die Zeit bis zum Empfang der von der Außenseite reflektierten Signale gemessen und die Differenz beider Laufzeiten bestimmt wird und daß diese drei Meßergebnisse als Meßdaten digitalisiert, zwischengespeichert und blockweise endgespeichert werden, wobei die Meßdaten derart komprimiert werden, daß von einem Meßwert lediglich in einem vorbestimmten Rahmen abweichende nachfolgende Meßwerte lediglich gezählt und ihrer Anzahl nach erfaßt und abgespeichert werden.

2. Verfahren nach Anspruch 1, dadurch gekennzeichnet, daß bei mehreren, über den Umfang des Molches vorgenommenen Messungen, diese insgesamt in einem Meßdatenblock mit weiteren Informationen zusammengefaßt werden und der Meßdatenblock zwischengespeichert wird.

3. Verfahren nach einem der vorangehenden Ansprüche, dadurch gekennzeichnet, daß die Wegstreckeninformation mehrfach gemessen und die wahrscheinlichste abgespeichert wird.

4. Verfahren nach Anspruch 3, dadurch gekennzeichnet, daß bei 3 Odometer-Rollen 2 Odometerräder ausgewählt werden, deren Meßergebnisse die geringste Differenz aufweisen.

5. Verfahren nach einem der vorangehenden Ansprüche, dadurch gekennzeichnet, daß nur solche Meßergebnisse aufgenommen und weiterverarbeitet werden, die innerhalb eines vorgegebenen Zeitbereichs nach Aussenden eines Meßsignals empfangen werden.

6. Verfahren nach einem der Ansprüche 1 bis 5, dadurch gekennzeichnet, daß ein niederfrequentes elektromagnetisches Wechselfeld in die Rohrwandung eingeschleust und mit Abstand zur Einschleusungsstelle detektiert sowie die Phasenverschiebung gemessen wird.

7. Verfahren nach einem der Ansprüche 1 bis 6, dadurch gekennzeichnet, daß nur die Differenz korrespondierender Meßwerte abgespeichert wird.

8. Verfahren nach einem der Ansprüche 6 bis 7, dadurch gekennzeichnet, daß ein, vorzugsweise das höchstwertige Bit eines digitalen Werts, insbesondere Bytes, zur Kennung der im Wert (Byte) enthaltenen Informationsart verwendet wird.

9. Verfahren nach Anspruch 7, dadurch gekennzeichnet, daß bei auftretenden Meßwertdifferenzen unterhalb eines vorgegebenen Werts mehrere, insbesondere zwei Meßwerte separat jeweils in einem einzigen Byte dargestellt werden und daß in einem Führungsbyte der Modus und die Anzahl der Bytes in diesem Modus eingetragen werden.

10. Verfahren nach einem der vorangehenden Ansprüche, dadurch gekennzeichnet. daß Rohrwandungsfehler nach ihrer Verteilung über ihrer Wandung dargestellt werden.

11. Verfahren nach einem der vorangehenden Ansprüche, dadurch gekennzeichnet, daß Querschnitte der Rohrwandung, insbesondere in Bereichen von Fehlerstellen, dargestellt werden.

12. Verfahren nach einem der vorangehenden Ansprüche, dadurch gekennzeichnet, daß unter einem vorgegebenen Molchgeschwindigkeitswert keine Verarbeitung von Messungen erfolgt.

## Claims

1. Method for the detection of corrosion or the like in pipelines by means of ultrasonics, ultrasonic signals being emitted during the travel of a scraper through a pipeline, the transit time difference between the signals reflected on the inner and outer walls being measured, measuring results being provided with a distance information, stored and the measuring results are evaluated after performing the test run, characterized in that cyclically both the time up to receiving the signals reflected by the inside of the pipeline and the time up to the receiving of the signals reflected by the outside are measured and the difference between the transit times is determined and that these three measuring results are digitized, intermediately stored and blockwise finally stored as measuring data which are compressed in such a way that of a measuring value only following measuring values diverging in a predetermined range are counted and are acquired and stored as a function of their number.

2. Method according to claim 1, characterized in that in the case of several measurements performed over the circumference of the scraper, they are combined into a measuring data block with further informations and the measuring data block is intermediately stored.

3. Method according to one of the preceding claims, characterized in that the distance information is multiply measured and the most probable informations stored.

4. Method according to claim 3, characterized in that in the case of three odometer rolls, two odometer wheels are selected which have the measuring results with the smallest difference.

5. Method according to one of the preceding claims, characterized in that only those measuring results are recorded and further processed, which are received within a predetermined time range following the emission of a measuring signal.

6. Method according to one of the claims 1 to 5, characterized in that a low frequency, electromagnetic alternating field is introduced into the pipe wall, is detected at a distance from the introduction point and the phase displacement is measured.

7. Method according to one of the claims 1 to 6, characterized in that only measuring values corresponding to the difference are stored.

8. Method according to one of the claims 6 to 7, characterized in that use is made of one and preferably the most significant bit of a digital value, particularly byte, for identifying the information type contained in the value (byte).

9. Method according to claim 7, characterized in that when measuring value differences occur below a predetermined value several and in particular two measuring values are separately represented in a single byte and in a guide byte are entered the mode and the number of bytes in the said mode.

10. Method according to one of the preceding claims, characterized in that pipe wall defects are represented as a function of their distribution over the wall.

11. Method according to one of the preceding claims, characterized in that cross-sections of the pipe wall, particularly in the vicinity of the defects are represented.

12. Method according to one of the preceding claims, characterized in that no processing of measurements takes place under a predetermined scraper speed value.

## Revendications

1. Procédé pour détecter de la corrosion ou analogues dans des canalisations au moyen d'ultrasons, dans lequel lors du passage d'un écouvillon à travers une canalisation sont émis des signaux ultrasonores, la différence de temps de transit entre des signaux réfléchis par la paroi intérieure et par la paroi extérieure est mesurée, des résultats de mesure, assortis d'une information de parcours, sont mis en mémoire et les résultats de mesure sont exploités après le déroulement du processus de mesure, caractérisé en ce que de manière cadencée tant le temps écoulé jusqu'à réception des signaux réfléchis par le côté intérieur de la canalisation que le temps écoulé jusqu'à réception des signaux réfléchis par le côté extérieur sont mesurés et la différence entre les deux temps de transit est déterminée et en ce que ces trois résultats de mesure sont numérisés en tant que données de mesure et mis en mémoire à titre intermédiaire, puis à titre définitif par blocs, les données de mesure étant compressées de telle manière que seules des valeurs de mesure subséquentes ne s'écartant que dans des limites prédéterminées d'une valeur de mesure donnée sont comptées et, en fonction de leur nombre, relevées et mises en mémoire.

2. Procéde selon la revendication 1, caractérisé en ce que dans le cas de plusieurs mesures effectuées sur la périphérie de l'écouvillon ces dernières sont en totalité regroupées avec d'autres informations dans un bloc de données de mesure et ce bloc de données de mesure est mis en mémoire à titre intermédiaire.

3. Procédé selon la revendication 1 ou 2, caractérisé en ce que l'information de parcours est mesurée à plusieurs reprises et celle la plus probable est mise en mémorie.

4. Procédé selon la revendication 3, caractérisé en ce que dans le cas de trois organes de roulement odométriques il est sélectionné deux roues odométriques dont les résultats de mesure présentent la différence la plus faible.

5. Procédé selon l'une quelconque des revendications précédentes, caractérisé en ce que ne sont relevés et traités que des résultats de mesure qui sont reçus à l'intérieur d'un intervalle de temps préétabli après l'émission d'un signal de mesure.

6. Procédé selon l'une quelconque des revendications précédentes, caractérisé en ce qu'un champ électromagnétique alternatif à basse fréquence est introduit dans la paroi de la canalisation et détecté à une certaine distance de la région d'introduction, et le déphasage est mesuré.

7. Procédé selon l'une quelconque des revendications 1 à 6, caractérisé en ce que seule la différence entre des valeurs de mesure correspondantes est mise en mémoire.

8. Procédé selon l'une quelconque des revendications 6 à 7, caractérisé en ce qu'un élément binaire (bit), de préférence celui présentant la valeur la plus élevée, d'une valeur numérique, en particulier d'octets (bytes), est utilisé pour caractériser le type d'information contenu dans la valeur (octet).

9. Procédé selon la revendication 7, caractérisé en ce qu'en présence de différences de valeur de mesure inférieures à une valeur préétablie plusieurs, en particulier deux, valeurs de mesure sont chacune représentées séparément dans un seul octet et en ce que dans un octet directeur le mode et le nombre des octets dans ce mode sont inscrits.

10. Procédé selon l'une quelconque des revendications précédentes, caractérisé en ce que des défauts de la paroi d'une canalisation sont représentés selon leur répartition sur cette paroi.

11. Procédé selon l'une quelconque des revendications précédentes, caractérisé en ce que des sections de la paroi de canalisations, en particulier dans des régions de défauts, sont représentées.

12. Procédé selon l'une quelconque des revendications précédentes, caractérisé en ce qu'au-dessous d'une valeur de vitesse d'écouvillon préétablie aucun traitement de mesures n'a lieu.
